Europäisches Patentamt

European Patent Office

Office européen des brevets

(19)

(11) Publication number: **0 012 559**
**B1**

(12) **EUROPEAN PATENT SPECIFICATION**

(45) Date of publication of patent specification: 22.06.83

(51) Int. Cl.³: **C 08 L 27/06, C 08 L 71/02**

(21) Application number: **79302790.5**

(22) Date of filing: **05.12.79**

(54) **Polyvinyl chloride - ethylene oxide polymer blends and methods of modifying the impact and melt flow properties of polyvinyl chloride.**

(30) Priority: **06.12.78 US 966935**

(43) Date of publication of application:
**25.06.80 Bulletin 80/13**

(45) Publication of the grant of the patent:
**22.06.83 Bulletin 83/25**

(84) Designated Contracting States:
**BE DE FR GB IT NL**

(56) References cited:
**FR - A - 2 327 265**
**FR - A - 2 374 409**
**US - A - 3 297 783**

(73) Proprietor: **Rohm and Haas Company**
**Independence Mall West**
**Philadelphia, Pennsylvania 19105 (US)**

(72) Inventor: **Myers, Robert Marshall**
**2339 Borbeck Avenue**
**Philadelphia, PA 19152 (US)**

(74) Representative: **Angell, David Whilton et al,**
**Rohm and Haas Company Patent Department**
**Chesterfield House Bloomsbury Way**
**London WC1A 2TP (GB)**

Courier Press, Leamington Spa, England.

## Polyvinyl chloride-ethylene oxide polymer blends and methods of modifying the impact and melt flow properties of polyvinyl chloride

This invention is concerned with blends of polyvinyl chloride and certain ethylene oxide polymers, methods for impact modification and improving the melt flow properties of polyvinyl chloride and certain crosslinked ethylene oxide polymers useful in the blends and methods.

Although the polyvinyl chloride (PVC) impact modifier art is a crowded one since there is a commercial need for such impact modification, it has never been suggested that ethylene oxide polymers would function as PVC impact modifiers.

In U.S. Patent 3,297,783, polyethylene oxide (PEO) having pendant epoxy groups and prepared from a monomer system comprising an asymmetrical diepoxide, i.e., one having two epoxide groups of different reactivity, is shown to be a plasticizer for PVC, but such polymers are not shown to act as PVC impact modifiers.

U.S. Patent 3,453,347 discloses branched chain alkylene oxide polymers, especially butene-1-oxide polymer, in combination with rubbery post chlorinated polyethylene as a combined melt flow and impact modifier system for post chlorinated polyvinyl chloride (PCPVC). However, the art of impact modification of PCPVC is quite different to that of PVC impact modification, and furthermore butene-1-oxide polymer does not in fact significantly function as an impact modifier in PVC itself.

We have now found, surprisingly, that addition to polyvinyl chloride of a polymer derived from a monomer system comprising at least 80 percent by weight of ethylene oxide and free of epoxy groups along the polymer chain greatly increases the impact strength of PVC, especially at low temperatures. We have also found, quite unexpectedly, that such ethylene oxide polymers dramatically reduce the melt viscosity of PVC at high temperatures without any decrease in heat distortion temperature (DTUFL) of the solid PVC, thus improving its melt flow characteristics. The invention also includes polymers derived from a monomer system comprising at least 80 percent by weight of ethylene oxide, the polymer being free of pendant epoxy groups along the polymer chain and, preferably, 0.1 to 2 percent by weight of a symmetrical terminal diepoxide as a crosslinking agent for the polymer.

The ethylene oxide polymers useful as impact modifiers for PVC in this invention are polymerized from monomer systems comprising at least 80 percent by weight of ethylene oxide and are free of pendant epoxy groups. The ethylene oxide polymers preferably have a viscosity average molecular weight of at least 200,000 and up to 10,000,000. The ethylene oxide polymers can be crosslinked by incorporating a small amount, 0.01 to 5 percent, preferably 0.1 to 3 percent, more preferably 0.1 to 2 percent, by weight, based on total monomers, of a symmetrical terminal diepoxide. These crosslinked polymers themselves are one embodiment of this invention. Asymmetrical diepoxides, i.e., those having two epoxy groups of differing reactivity, cannot be used because they cause pendant epoxy groups in the ethylene oxide polymers, and destroy the impact modifier utility. Suitable diepoxides for use in this invention are 1,4-butanediol diglycidylether, resorcinol diglycidyl ether, and Bisphenol A diglycidylether.

Up to 20 percent by weight of one or more other monoepoxides, preferably alkylene oxides such as propylene oxide, can be included in the monomer system used to make the ethylene oxide polymer, although the use of such other epoxides is quite optional. Preferably the monomer system consists of ethylene oxide.

Any PVC is suitable in the invention, since the ethylene oxide polymer appears to impact modify all PVC. Of course, any of the usual PVC fillers, colorants, and other additives can be used.

The amount of ethylene oxide polymer which is used is any amount sufficient to improve the impact resistance of the PVC. Amounts of at least 1 part by weight ethylene oxide polymer per hundred parts by weight PVC are necessary to significantly improve the impact resistance values, and amounts as much as 30 parts are operable. Preferably, 4 to 20 parts can be used.

Accordingly, this invention provides a method of impact modification of PVC which comprises adding thereto 1 to 30 parts by weight of ethylene oxide polymer described herein per 100 parts by weight of PVC.

As another advantage of this invention, it has been found that the melt flow properties are improved by this invention, making the impact modified PVC more suitable for injection molding applications.

A further embodiment of this invention is a method of improving the melt flow properties of PVC which comprises blending therewith from 1 to 30 parts by weight of ethylene oxide polymer described herein per 100 parts by weight of PVC.

The impact modified PVC polymers have outstanding utility in a wide variety of applications where a rigid, impact resistant PVC is needed. This invention extends the PVC/ethylene oxide polymer blends of the invention in the form of shaped articles.

The following examples are presented to illustrate a few embodiments of the invention. All parts and percentages are by weight and all ethylene oxide polymers are free from pendant epoxy groups along the polymer chain.

Example 1

One hundred parts of PVC having a K=69 are blended with 8 parts of ethylene oxide homopolymer having a viscosity average molecular weight of about 400,000 and the following additives: 0.6 parts of a high molecular weight methyl methacrylate, butyl methacrylate, ethyl acrylate terpolymer processing aid, 0.9 parts calcium stearate, 0.6 parts low molecular weight hydrocarbon wax having a 165°C melting point, 10 parts titanium dioxide pigment, and 2.5 parts dibutyl tin (bis alkyl thioglycolate) (Advastab TM—180, Cincinatti Milicron) stabilizer by mixing on a two roll rubber mill at 182°C (360°F) for seven minutes.

The notched Izod impact resistance of the resultant composition at 23°C was increased from 0.053 Jmm⁻¹ (1 ft.—lb./in.) (for the unmodified PVC) to 1.12 Jmm⁻¹ (21 ft.—lb./in.) for the PEO modified PVC.

Example 2

Example 1 was repeated, except using an ethylene oxide homopolymer of a viscosity average molecular weight of 1,000,000. The notched Izod impact resistance was 1.12 Jmm⁻¹ (21 ft.—lb./in.).

Example 3

Example 1 was repeated except using 8 parts crosslinked ethylene oxide polymer which was prepared by copolymerizing ethylene oxide with butane glycol diglycidyl ether crosslinker at a level of 2%. The milling time was four minutes instead of seven. The notched Izod impact strength of the blend was 1.17 Jmm⁻¹ (22 ft.—lb./in.)

Example 4

Example 1 was repeated except using an ethylene oxide/propylene oxide copolymer at a 90/10 weight ratio and the notched Izod impact strength was 0.96 Jmm⁻¹ (18 ft.—lb./in.)

Comparative experiment A

Example 1 was repeated, except using 0.25, 1.5, 2.5, 4, 6 and 8 parts of butylene oxide homopolymer instead of the ethylene oxide homopolymer. The impact strength was not improved in any of these experiments.

Example 5

In a typical simple injection molding formulation containing 100 parts of a PVC having a K=69 and 3 parts of TM—180, various poly(ethylene oxides) were added, and tested as to melt flow improvement as compared with unmodified PVC and PVC containing a conventional MBS (methacrylate-butadiene-styrene) modifier. In each case, the modifier concentration was 4 parts. The results are reported in the following table.

TABLE

| Modifier | % Improvement in flow |
|---|---|
| None | — |
| Methacrylate-butadiene-styrene polymer | 0 |
| Ethylene oxide polymer of Example 1 | 50 |
| Ethylene oxide polymer of Example 2 | 36 |
| Crosslinked ethylene oxide polymer of Example 3 | 27 |

The applicants acknowledge the trademark ADVASTAB which may or may not be registered in some or all of the designated states.

**Claims**

1. A composition comprising a blend of polyvinyl chloride and 1 to 30 parts by weight (per 100 parts by weight of polyvinyl chloride) of a polymer derived from a monomer system comprising at least 80 percent by weight of ethylene oxide and free of pendant epoxy groups along the polymer chain.

2. A composition as claimed in Claim 1 wherein the monomer system consists essentially of ethylene oxide.

3. A composition as claimed in claim 1 wherein the monomer system includes up to 20 percent by weight of one or more alkylene oxides other than ethylene oxide.

4. A composition as claimed in claim 3 wherein the monomer system includes up to 20 percent by weight of propylene oxide.

5. A composition as claimed in any of claims 1 to 4 wherein the polymer used is so formed from the monomer system that it has a viscosity average molecular weight of from 200,000 to 10,000,000.

6. A composition as claimed in any preceding claim wherein the monomer system further includes from 0.01 to 5 percent by weight of at least one symmetrical terminal diepoxide as crosslinking agent for the polymer.

7. A composition as claimed in claim 6 wherein the monomer system includes from 0.01 to 3 percent by weight of the diepoxide.

8. A composition as claimed in any preceding claim wherein the polymer comprises from 4 to 20 parts by weight per 100 parts by weight of polyvinyl chloride in the blend.

9. A process for modifying the impact resistance of polyvinyl chloride which comprises adding thereto from 1 to 30 parts by weight of polymer per 100 parts by weight of polyvinyl chloride, which polymer is derived from a monomer system comprising at least 80 percent by weight of ethylene oxide, the polymer being free of pendant epoxy groups along the polymer chain and having a viscosity average molecular weight of from 200,000 to 10,000,000.

10. A process for improving the melt flow properties of polyvinyl chloride which comprises blending therewith from 1 to 30 parts by weight of polymer per 100 parts by weight of polyvinyl chloride, the polymer being derived from a monomer system comprising at least 80 percent by weight of ethylene oxide and being free of pendant epoxy groups along the polymer chain.

11. A polymer derived from a monomer system comprising at least 80 percent by weight of ethylene oxide, the polymer being free of pendant epoxy groups along the polymer chain, and from 0.01 to 5 percent by weight of at least one symmetrical terminal diepoxide as crosslinking agent for the polymer.

**Patentansprüche**

1. Masse aus einer Mischung aus Polyvinylchlorid und 1 bis 30 Gewichtsteilen (pro 100 Gewichtsteile Polyvinylchlorid) eines Polymeren, das auf ein Monomersystem zurückgeht, das aus wenigstens 80 Gew.-% Ethylenoxid besteht, wobei das Polymere frei von längs der Polymerkette hängenden Epoxygruppen ist.

2. Masse nach Anspruch 1, dadurch gekennzeichnet, daß das Monomersystem im wesentlichen aus Ethylenoxid besteht.

3. Masse nach Anspruch 1, dadurch gekennzeichnet, daß das Monomersystem bis zu 20 Gew.-% eines oder mehrerer Alkylenoxide außer Ethylenoxid enthält.

4. Masse nach Anspruch 3, dadurch gekennzeichnet, daß das Monomersystem bis zu 20 Gew.-% Propylenoxid enthält.

5. Masse nach einem der Ansprüche 1 bis 4, dadurch gekennzeichnet, daß das verwendete Polymere so aus dem Monomersystem gebildet wird, daß es ein anhand der Viskosität ermitteltes durchschnittliches Molekulargewicht von 200.000 bis 10.000.000 besitzt.

6. Masse nach einem der vorhergehenden Ansprüche, dadurch gekennzeichnet, daß das Monomersystem 0,01 bis 5 Gew.-% wenigstens eines symmetrischen endständigen Diox-ids als Vernetzungsmittel für das Polymere enthält.

7. Masse nach Anspruch 6, dadurch gekennzeichnet, daß das Monomersystem 0,01 bis 3 Gew.-% des Diepoxids enthält.

8. Masse nach einem der vorhergehenden Ansprüche, dadurch gekennzeichnet, daß das Polymere 4 bis 20 Gew.-Teile pro 100 Gew.-Teile des Polyvinylchlorids in der Mischung ausmacht.

9. Verfahren zur Modifizierung der Schlag-festigkeit von Polyvinylchlorid, dadurch gekenn-zeichnet, daß 1 bis 30 Gew.-Teile eines Polymeren pro 100 Gew.-Teile Polyvinylchlorid zugesetzt werden, wobei das Polymere auf ein Monomersystem zurückgeht, das aus wenigstens 80 Gew.-% Ethylenoxid besteht, wobei das Polymere frei von längs der Polymerkette hängenden Epoxidgruppen ist und ein anhand der Viskosität ermitteltes durchschnittliches Molekulargewicht von 200.000 bis 10.000.000 besitzt.

10. Verfahren zur Verbesserung der Schmelzfließeigenschaften von Polyvinylchlorid, dadurch gekennzeichnet, daß mit ihm 1 bis 30 Gew.-Teile eines Polymeren pro 100 Gew.-Teile des Polyvinylchlorids vermischt werden, wobei das Polymere auf ein Monomersystem zurückgeht, das aus wenigstens 80 Gew.-% Ethylenoxid besteht, wobei das Polymere frei von längs der Polymerkette hängenden Epoxygruppen ist.

11. Polymeres, das auf ein Monomersystem zurückgeht, das aus wenigstens 80 Gew.-% Ethylenoxid, wobei das Polymere frei von längs der Polymerketten hängenden Epoxygruppen ist, und 0,01 bis 5 Gew.-% wenigstens eines symmetrischen endständigen Diepoxids als Vernetzungsmittel für das Polymere besteht.

**Revendications**

1. Une composition comprenant un mélange de chlorure de polyvinyle et de 1 à 30 parties en poids (pour 100 parties en poids du chlorure de polyvinyle) d'un polymère dérivant d'un système monomère comprenant au moins 90% en poids d'oxyde d'éthylène et dépourvu de groupes époxy latéraux le long de la chaîne polymère.

2. Une composition selon la revendication 1 dans laquelle le système monomère est constitué essentiellement d'oxyde d'éthylène.

3. Une composition selon la revendication 1 où le système monomère comprend jusqu'à 20% en poids d'un ou plusieurs oxydes d'alcoylène autres que l'oxyde d'éthylène.

4. Une composition selon la revendication 3 où le système monomère comprend jusqu'à 20% en poids d'oxyde de propylène.

5. Une composition selon l'une quelconque des revendications 1 à 4 où le polymère utilisé est formé à partir du système monomère pour avoir un poids moléculaire moyen déterminé à partir de la viscosité de 200 000 à 10 000 000.

6. Une composition selon l'une quelconque des revendications précédentes où le système monomère comprend de plus 0,01 à 5% en poids d'au moins un diépoxyde terminal symétrique comme agent de réticulation du polymère.

7. Une composition selon la revendication 6 où le système monomère comprend 0,01 à 3% en poids du diépoxyde.

8. Une composition selon l'une quelconque des revendications précédentes où la quantité de polymère est de 4 à 20 parties en poids pour 100 parties en poids de chlorure de polyvinyle dans le mélange.

9. Un procédé pour modifier la résistance au choc du chlorure de polyvinyle qui comprend l'addition à celui-ci de 1 à 30 parties en poids de polymère pour 100 parties en poids de chlorure de polyvinyle, le polymère dérivant d'un système monomère comprenant au moins 80% en poids d'oxyde d'éthylène, le polymère étant dépourvu de groupes époxy latéraux le long de la chaîne polymère et ayant un poids moléculaire moyen déterminé à partir de la viscosité de 200 000 à 10 000 000.

10. Un procédé pour améliorer les propriétés de fluidité à l'état fondu du chlorure de polyvinyle qui comprend le mélange avec celui-ci de 1 à 30 parties en poids de polymère pour 100 parties en poids de chlorure de polyvinyle, le polymère dérivant d'un système monomère comprenant au moins 80% en poids d'oxyde d'éthylène et étant dépourvu de groupes époxy latéraux le long de la chaîne polymère.

11. Un polymère dérivant d'un système monomère comprenant au moins 80% en poids d'oxyde d'éthylène, le polymère étant dépourvu de groupes époxy latéraux le long de la chaîne polymère et 0,01 à 5% d'un diépoxyde terminal symétrique comme agent de réticulation du polymère.